# EUROPEAN PATENT APPLICATION

(11) **EP 4 733 280 A1**
(43) Date of publication of application: **29.04.2026**
(21) Application number: 24825713.1
(22) Date of filing: 04.06.2024
(51) Int. Cl.: C03C 3/12, C03C 3/062, C03C 3/068, C03C 3/07, C03C 3/15, C03C 3/155, C03C 3/21, C03C 8/16, C03C 8/24, C03C 12/00, H01L 23/10

(54) **GLASS COMPOSITION, SEALING MATERIAL, AND SEALING MATERIAL PASTE**

(30) Priority: 21.06.2023 JP 2023101863; 05.03.2024 JP 2024032749; 25.03.2024 JP 2024048079
(71) Applicant: NIPPON ELECTRIC GLASS CO., LTD, Otsu-shi, Shiga 520-8639 (JP)
(72) Inventor: SANO, Shoichi, Otsu-shi Shiga 520-8639 (JP)
(74) Representative: Henkel & Partner mbB
(86) International application number: PCT/JP2024/020389
(87) International publication number: WO 2024/262306

(57) **Abstract**

Provided are a glass composition, a sealing material, and a sealing material paste that permit sealing at a low temperature while having good weather resistance. The glass composition of the present invention is characterized by having as a glass composition, in mol%, TeO2 15-80%, MoO3 0.1-30%, V2O5 5-40%, and Nb205+MnO+Cr203+Fe203+Co304+NiO 0.1-10%.

## Description

### TECHNICAL FIELD

The present invention relates to a glass composition, a sealing material, and a sealing material paste capable of airtight sealing at a low temperature while having weather resistance.

### BACKGROUND ART

A sealing material is used for a semiconductor integrated circuit, a crystal oscillator, a metal member, vacuum insulation glass, a flat display device, a glass terminal for an LED, and the like. The sealing material is required to have chemical durability and heat resistance, and thus a glass-based sealing material is used instead of a resin-based adhesive. The sealing material is further required to have properties such as mechanical strength, fluidity, and weather resistance. In particular, a sealing temperature is required to be reduced as much as possible for sealing an electronic component on which a heat-sensitive element is mounted. Specifically, the sealing material is required to be capable of sealing at a temperature of 400°C or lower. As a glass satisfying this property, lead borate-based glass containing a large amount of PbO, which has a great effect of decreasing a softening point, has been widely used (for example, see Patent Literature 1).

### CITATION LIST

### PATENT LITERATURE

Patent Literature 1: JPS63-315536A
Patent Literature 2: JP2019-202921A

### SUMMARY OF INVENTION

### TECHNICAL PROBLEM

To reduce an environmental load, lead borate-based glass is desirably replaced by lead-free glass containing no PbO, and various types of low-softening-point lead-free glass have been developed.

However, in general, glass having a low softening point has low weather resistance, and as a result, problems such as cracking of the glass occur. Thus, it is not easy to implement both a low softening point and high weather resistance. A CuO-TeO₂-MoO₃-based glass described in Patent Literature 2 is promising alternative candidate for lead borate-based glass, and has good weather resistance, but cannot be said to have a sufficiently low softening point.

In view of the above, an object of the present invention is to provide a glass composition, a sealing material, and a sealing material paste capable of sealing at a low temperature while having good weather resistance.

### SOLUTION TO PROBLEM

As a result of intensive studies, the present inventors have found that the above problems can be solved by using predetermined TeO₂-V₂O₅-based glass, and have proposed the present invention. Hereinafter, aspects of the glass composition and the sealing material will be described.

A glass composition of aspect 1 containing: in mol%, 15% to 80% of TeO₂, 0.1% to 30% of MoO₃, 5% to 40% of V₂O₅, and 0.1% to 10% of Nb₂O₅+MnO+Cr₂O₃+Fe₂O₃+Co₃O₄+NiO as glass composition. Here, "Nb₂O₅+MnO+Cr₂O₃+Fe₂O₃+Co₃O₄+NiO" is a total content of Nb₂O₅, MnO, Cr₂O₃, Fe₂O₃, Co₃O₄, and NiO.

The glass composition of aspect 2 according to aspect 1, preferably further containing: in mol%, 0.1% to 35% of CuO, 0.1% to 10% of Al₂O₃, 1% to 30% of K₂O, and 0% to 10% of PbO, and substantially free of SeO₂. Here, "substantially free of SeO₂" means that a content of SeO₂ is less than 0.1 mol%.

The glass composition of aspect 3 according to aspect 1 or 2, preferably further containing: in mol%, 0.1% to 15% of Li₂O+Na₂O as glass composition, in which in terms of a molar ratio, (Li₂O+Na₂O)/K₂O is 0.05 to 1. Here, "Li₂O+Na₂O" refers to a total content of Li₂O and Na₂O. "(Li₂O+Na₂O)/K₂O" is a value obtained by dividing the total content of Li₂O and Na₂O by a content of K₂O.

The glass composition of aspect 4 according to any of aspects 1 to 3, preferably further containing: in mol%, 0.1% to 20% of MgO+CaO+SrO+BaO+ZnO as glass composition. Here, "MgO+CaO+SrO+BaO+ZnO" refers to a total content of MgO, CaO, SrO, BaO, and ZnO.

The glass composition of aspect 5 according to any of aspects 1 to 4, preferably further containing: in mol%, 0% to 10% of La₂O₃ and 0% to 10% of WO₃ as glass composition.

The glass composition of aspect 6 according to any of aspects 1 to 5, preferably further containing: in mol%, 0% to 5% of SiO₂, 0% to 5% of TiO₂, 0% to 5% of ZrO₂, and 0% to 5% of CeO₂ as glass composition.

A sealing material of aspect 7, preferably containing: 40 vol% to 100 vol% of a glass powder made of the glass composition of any of aspects 1 to 6; and 0 vol% to 60 vol% of a refractory filler powder.

In the sealing material of aspect 8 according to aspect 7, the refractory filler powder is preferably substantially spherical. Here, "substantially spherical" is not limited only to a true sphere, and refers to a refractory filler powder in which a value obtained by dividing the shortest diameter passing through a center of gravity of the refractory filler powder by the longest diameter is 0.5 or more, and preferably 0.7 or more.

In the sealing material of aspect 9 according to aspect 7 or 8, the refractory filler powder is preferably entirely or partially Zr₂WO₄(PO₄)₂.

The sealing material of aspect 10 according to any of aspects 7 to 9 preferably used for a crystal oscillator package.

The sealing material of aspect 11 according to any of aspects 7 to 9 preferably used for vacuum insulation glass.

A sealing material paste of aspect 12 preferably containing: the sealing material of any of aspects 7 to 11; and a vehicle.

### ADVANTAGEOUS EFFECTS OF INVENTION

The present invention can provide a glass composition, a sealing material, and a sealing material paste capable of sealing at a low temperature while having good weather resistance.

### BRIEF DESCRIPTION OF DRAWINGS

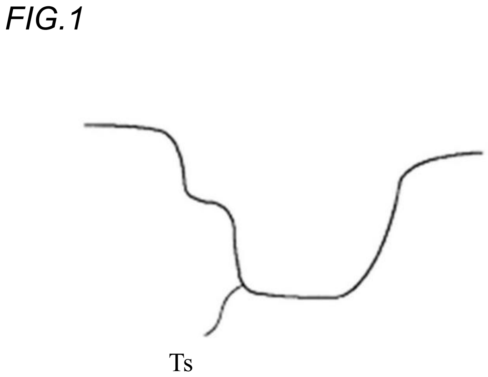

FIG.1 is a schematic diagram illustrating a measurement curve obtained by a macro-type differential thermal analyzer.

### DESCRIPTION OF EMBODIMENTS

A glass composition according to the present invention contains, in mol%, 15% to 80% of TeO₂, 0.1% to 30% of MoO₃, 5% to 40% of V₂O₅, and 0.1% to 10% of Nb₂O₅+MnO+Cr₂O₃+Fe₂O₃+Co₃O₄+NiO as glass composition. A reason for limiting a glass composition range as described above is shown below. In the description regarding a content of each component, "%" means "mol%" unless otherwise specified.

TeO₂ is a component that forms a glass network and that increases weather resistance. A content of TeO₂ is 15% to 80%, preferably 20% to 70%, 25% to 65%, 30% to 60%, and particularly preferably 40% to 55%. In a case where the content of TeO₂ is extremely small, the glass becomes thermally unstable, and the glass is prone to devitrification during melting or firing. On the other hand, in a case where the content of TeO₂ is extremely large, a viscosity (softening point or the like) of the glass becomes high, low-temperature sealing becomes difficult, and a thermal expansion coefficient tends to be extremely high.

MoO₃ is a component that forms a glass network and that reduces the viscosity (softening point or the like) of the glass. A content of MoO₃ is 0.1% to 30%, preferably 1% to 20%, 2% to 10%, and particularly preferably 2.5% to 5%. In a case where the content of MoO₃ is extremely small, vitrification becomes difficult, the viscosity (softening point or the like) of the glass increases, and low-temperature sealing becomes difficult. On the other hand, in a case where the content of MoO₃ is extremely large, the glass becomes thermally unstable, the glass is prone to devitrification during melting or firing, and the thermal expansion coefficient tends to be extremely high.

V₂O₅ is a component that forms a glass network and that reduces the viscosity (softening point or the like) of the glass. In addition, V₂O₅ is a component that reduces the thermal expansion coefficient. A content of V₂O₅ is 5% to 40%, preferably 7% to 35%, 10% to 30%, 11% to 25%, and particularly preferably 12% to 20%. In a case where the content of V₂O₅ is extremely small, vitrification becomes difficult, the viscosity (softening point or the like) of the glass increases, and low-temperature sealing becomes difficult. In addition, the thermal expansion coefficient tends to be extremely high. On the other hand, in a case where the content of V₂O₅ is extremely large, the glass becomes thermally unstable, and the glass is prone to devitrification during melting or firing.

Nb₂O₅ is a component that thermally stabilizes the glass and that increases the weather resistance. A content of Nb₂O₅ is preferably 0% to 10%, 0.1% to 10%, 0.5% to 9%, 1% to 7.5%, and particularly preferably 2% to 5%. In a case where the content of Nb₂O₅ is extremely small, the glass becomes thermally unstable, and the glass is prone to devitrification during melting or firing. In addition, the weather resistance decreases, and as a result, cracks are likely to occur in the glass. On the other hand, in a case where the content of Nb₂O₅ is extremely large, the viscosity (softening point or the like) of the glass increases, and low-temperature sealing tends to be difficult.

MnO is a component that thermally stabilizes the glass and that increases the weather resistance. In addition, MnO is a component that enhances reactivity with the object to be sealed. A content of MnO is preferably 0% to 10%, 0.1% to 10%, 0.5% to 9%, 1% to 7.5%, and particularly preferably 2% to 5%. In a case where the content of MnO is extremely small, the glass becomes thermally unstable, and the glass is prone to devitrification during melting or firing. In addition, the weather resistance decreases, and as a result, cracks are likely to occur in the glass. On the other hand, in a case where the content of MnO is extremely large, the viscosity (softening point or the like) of the glass increases, and low-temperature sealing tends to be difficult.

Cr₂O₃ is a component that thermally stabilizes the glass and that increases the weather resistance. In addition, Cr₂O₃ is a component that enhances reactivity with the object to be sealed. A content of Cr₂O₃ is preferably 0% to 10%, 0.1% to 10%, 0.5% to 9%, 1% to 7.5%, and particularly preferably 2% to 5%. In a case where the content of Cr₂O₃ is extremely small, the glass becomes thermally unstable, and the glass is prone to devitrification during melting or firing. In addition, the weather resistance decreases, and as a result, cracks are likely to occur in the glass. On the other hand, in a case where the content of Cr₂O₃ is extremely large, the viscosity (softening point or the like) of the glass increases, and low-temperature sealing tends to be difficult.

Fe₂O₃ is a component that thermally stabilizes the glass and that increases the weather resistance. In addition, Fe₂O₃ is a component that enhances reactivity with the object to be sealed. A content of Fe₂O₃ is preferably 0% to 10%, 0.1% to 10%, 0.5% to 9%, 1% to 7.5%, and particularly preferably 2% to 5%. In a case where the content of Fe₂O₃ is extremely small, the glass becomes thermally unstable, and the glass is prone to devitrification during melting or firing. In addition, the weather resistance decreases, and as a result, cracks are likely to occur in the glass. On the other hand, in a case where the content of Fe₂O₃ is extremely large, the viscosity (softening point or the like) of the glass increases, and low-temperature sealing tends to be difficult.

Co₃O₄ is a component that thermally stabilizes the glass and that increases the weather resistance. In addition, Co₃O₄ is a component that enhances reactivity with the object to be sealed. A content of Co₃O₄ is preferably 0% to 10%, 0.1% to 10%, 0.5% to 9%, and particularly preferably 1% to 7.5%. In a case where the content of Co₃O₄ is extremely small, the glass becomes thermally unstable, and the glass is prone to devitrification during melting or firing. In addition, the weather resistance decreases, and as a result, cracks are likely to occur in the glass. On the other hand, in a case where the content of Co₃O₄ is extremely large, the viscosity (softening point or the like) of the glass increases, and low-temperature sealing tends to be difficult.

NiO is a component that thermally stabilizes the glass and that increases the weather resistance. In addition, NiO is a component that enhances reactivity with the object to be sealed. A content of NiO is preferably 0% to 10%, 0.1% to 10%, 0.5% to 9%, and particularly preferably 1% to 7.5%. In a case where the content of NiO is extremely small, the glass becomes thermally unstable, and the glass is prone to devitrification during melting or firing. In addition, the weather resistance decreases, and as a result, cracks are likely to occur in the glass. On the other hand, in a case where the content of NiO is extremely large, the viscosity (softening point or the like) of the glass increases, and low-temperature sealing tends to be difficult.

Nb₂O₅+MnO+Cr₂O₃+Fe₂O₃+Co₃O₄+NiO (total content of Nb₂O₅, MnO, Cr₂O₃, Fe₂O₃, Co₃O₄, and NiO) is 0.1% to 10%, preferably 0.5% to 9%, 1% to 7.5%, and particularly preferably 2% to 5%. On the other hand, in a case where Nb₂O₅+MnO+Cr₂O₃+Fe₂O₃+Co₃O₄+NiO is extremely small, the glass becomes thermally unstable, and the glass is prone to devitrification during melting or firing. In addition, the weather resistance decreases, and as a result, cracks are likely to occur in the glass. On the other hand, in a case where Nb₂O₅+MnO+Cr₂O₃+Fe₂O₃+Co₃O₄+NiO is extremely large, the viscosity (softening point or the like) of the glass increases, and low-temperature sealing tends to be difficult.

The following components may be introduced in addition to the above components.

CuO is a component that reduces the viscosity (softening point or the like) of the glass and that reduces the thermal expansion coefficient. In addition, CuO is a component that increases an adhesion strength between glass and a metal when the metal is sealed. Although a mechanism of increasing the adhesion strength is unknown at present, Cu atoms have high diffusivity and thus diffuse from the surface toward the inside of the metal, and this presumably facilitates integration of glass and metal. A type of the metal, which is an object to be sealed, is not particularly limited, and examples thereof include iron, iron alloys, nickel, nickel alloys, copper, copper alloys, aluminum, and aluminum alloys. A content of CuO is preferably 0% to 35%, 0.1% to 35%, 0.2% to 30%, 0.3% to 25%, 0.4% to 20%, 0.5% to 15%, 1% to 12%, and particularly preferably 3% to 11%. In a case where the content of CuO is extremely small, vitrification becomes difficult, the viscosity (softening point or the like) of the glass increases, and low-temperature sealing becomes difficult. In addition, the thermal expansion coefficient tends to be extremely high. In a case where the content of CuO is extremely large, the glass becomes thermally unstable, and the metal Cu is precipitated from the glass surface in a sealing step, which may adversely affect the sealing strength and electrical properties. In addition, the glass is prone to devitrification during melting or firing.

Al₂O₃ is a component that improves the weather resistance. A content of Al₂O₃ is preferably 0% to 10%, 0.1% to 10%, 0.3% to 8%, 0.5% to 6%, and particularly preferably 1% to 4%. In a case where the content of Al₂O₃ is extremely small, the weather resistance of the glass decreases, and as a result, cracks are likely to occur in the glass. In a case where the content of Al₂O₃ is extremely large, the viscosity (softening point or the like) of the glass increases, and low-temperature sealing becomes difficult.

Li₂O, Na₂O, and K₂O are components that reduce the viscosity (softening point or the like) of the glass. A content of Li₂O+Na₂O+K₂O is preferably 0% to 30%, 1% to 30%, 5% to 25%, 7% to 23%, and particularly preferably 10% to 20%. In a case where the content of Li₂O+Na₂O+K₂O is extremely small, the viscosity (softening point or the like) of the glass may increase, and sealing at a low temperature may become difficult. In addition, vitrification may become difficult. On the other hand, in a case where the content of Li₂O+Na₂O+K₂O is extremely large, the glass becomes thermally unstable, and the glass is prone to devitrification during melting or firing. In addition, the weather resistance is likely to be deteriorated, and the thermal expansion coefficient tends to be extremely high. A content of Li₂O+Na₂O is preferably 0% to 15%, 0.1% to 15%, 1% to 12%, and particularly preferably 2% to 10%.

Li₂O is a component that significantly reduces the viscosity (softening point or the like) of the glass as compared with Na₂O and K₂O. A content of Li₂O is preferably 0% to 15%, 0.1% to 15%, 1% to 12%, and particularly preferably 2% to 10%. In a case where the content of Li₂O is extremely small, the viscosity (softening point or the like) of the glass may increase, and sealing at a low temperature may become difficult. In addition, vitrification may become difficult. On the other hand, in a case where the content of Li₂O is extremely large, the glass becomes thermally unstable, and the glass is prone to devitrification during melting or firing. In addition, the weather resistance is likely to be deteriorated, and the thermal expansion coefficient tends to be extremely high.

Na₂O is a component that reduces the viscosity (softening point or the like) of the glass. A content of Na₂O is preferably 0% to 15%, 0.1% to 15%, 1% to 12%, and particularly preferably 2% to 10%. In a case where the content of Na₂O is extremely small, the viscosity (softening point or the like) of the glass may increase, and sealing at a low temperature may become difficult. In addition, vitrification may become difficult. On the other hand, in a case where the content of Na₂O is extremely large, the glass becomes thermally unstable, and the glass is prone to devitrification during melting or firing. In addition, the weather resistance is likely to be deteriorated, and the thermal expansion coefficient tends to be extremely high.

K₂O is a component that reduces the viscosity (softening point or the like) of the glass without significantly deteriorating the weather resistance as compared with Li₂O and Na₂O. A content of K₂O is preferably 0% to 30%, 1% to 30%, 3% to 25%, 5% to 22%, and particularly preferably 10% to 20%. In a case where the content of K₂O is extremely small, the viscosity (softening point or the like) of the glass may increase, and sealing at a low temperature may become difficult. In addition, vitrification may become difficult. Further, the weather resistance decreases, and as a result, cracks are likely to occur in the glass. On the other hand, in a case where the content of K₂O is extremely large, the glass becomes thermally unstable, and the glass is prone to devitrification during melting or firing.

In terms of a molar ratio, (Li₂O+Na₂O)/K₂O is preferably 0.05 to 1, 0.08 to 0.6, and particularly preferably 0.1 to 0.3, in order to reduce the viscosity (softening point or the like) of the glass without significantly deteriorating the weather resistance.

PbO is a component that reduces the viscosity (softening point or the like) of the glass, and in consideration of the environmental aspect, a content of PbO is 0% to 10%, preferably 0% to 5%, 0% to 3%, 0% to 1%, and particularly preferably substantially free (less than 0.1%).

MgO, CaO, SrO, BaO, and ZnO are components that expand the vitrification range and that improve the weather resistance. MgO+CaO+SrO+BaO+ZnO is preferably 0% to 30%, 0.1% to 20%, 1.2% to 15%, 1.5% to 12%, and particularly preferably 1.5% to 5%. In a case where a content of MgO+CaO+SrO+BaO+ZnO is extremely small, the viscosity (softening point or the like) of the glass may increase, and sealing at a low temperature may become difficult. In addition, vitrification may become difficult. On the other hand, in a case where the content of MgO+CaO+SrO+BaO+ZnO is extremely large, the glass becomes thermally unstable, and the glass is prone to devitrification during melting or firing. In addition, the weather resistance is likely to be deteriorated, and the thermal expansion coefficient tends to be extremely high.

MgO is a component that expands the vitrification range and that improves the weather resistance. A content of MgO is preferably 0% to 25%, 0% to 20%, 0% to 10%, and particularly preferably 0.5% to 7%. In a case where the content of MgO is small, vitrification may become difficult. In addition, the viscosity (softening point or the like) of the glass may increase, and sealing at a low temperature may become difficult. On the other hand, in a case where the content of MgO is extremely large, the glass becomes thermally unstable, and the glass is prone to devitrification during melting or firing. In addition, the weather resistance is likely to be deteriorated, and the thermal expansion coefficient tends to be extremely high.

CaO is a component that expands the vitrification range and that improves the weather resistance. A content of CaO is preferably 0% to 25%, 0% to 20%, 0% to 10%, and particularly preferably 0.5% to 7%. In a case where the content of CaO is small, vitrification may become difficult. In addition, the viscosity (softening point or the like) of the glass may increase, and sealing at a low temperature may become difficult. On the other hand, in a case where the content of CaO is extremely large, the glass becomes thermally unstable, and the glass is prone to devitrification during melting or firing. In addition, the weather resistance is likely to be deteriorated, and the thermal expansion coefficient tends to be extremely high.

SrO is a component that expands the vitrification range and that improves the weather resistance. A content of SrO is preferably 0% to 25%, 0% to 20%, 0% to 10%, and particularly preferably 0.5% to 7%. In a case where the content of SrO is small, vitrification may become difficult. In addition, the viscosity (softening point or the like) of the glass may increase, and sealing at a low temperature may become difficult. On the other hand, in a case where the content of SrO is extremely large, the glass becomes thermally unstable, and the glass is prone to devitrification during melting or firing. In addition, the weather resistance is likely to be deteriorated, and the thermal expansion coefficient tends to be extremely high.

BaO is a component that expands the vitrification range and that improves the weather resistance. A content of BaO is preferably 0% to 25%, 0.1% to 20%, 0.5% to 10%, and particularly preferably 1% to 7%. In a case where the content of BaO is small, vitrification may become difficult. In addition, the viscosity (softening point or the like) of the glass may increase, and sealing at a low temperature may become difficult. On the other hand, in a case where the content of BaO is extremely large, the glass becomes thermally unstable, and the glass is prone to devitrification during melting or firing. In addition, the weather resistance is likely to be deteriorated, and the thermal expansion coefficient tends to be extremely high.

ZnO is a component that expands the vitrification range and that improves the weather resistance. A content of ZnO is preferably 0% to 25%, 0.1% to 22%, 1% to 20%, and particularly preferably 2% to 15%. In a case where the content of ZnO is extremely small, vitrification becomes difficult. In addition, the viscosity (softening point or the like) of the glass increases, and low-temperature sealing becomes difficult. On the other hand, in a case where the content of ZnO is extremely large, the glass becomes thermally unstable, and the glass is prone to devitrification during melting or firing. In addition, the weather resistance is likely to be deteriorated, and the thermal expansion coefficient tends to be extremely high.

AgI is a component that reduces the viscosity (softening point or the like) of the glass. A content of AgI is preferably 0% to 3%, 0% to 2%, and particularly preferably 0% to 1%. In a case where the content of AgI is extremely large, the thermal expansion coefficient tends to be extremely high.

SeO₂ is a component that reduces the viscosity (softening point or the like) of the glass, and in consideration of the environmental aspect, a content of SeO₂ is preferably 0% to 10%, 0% to 5%, 0% to 3%, 0% to 1%, and particularly preferably substantially free (less than 0.1%).

B₂O₃ is a component that forms a glass network. A content of B₂O₃ is 0% to 20%, preferably 0% to 10%, and particularly preferably 0.1% to 5%. In a case where the content of B₂O₃ is extremely large, the viscosity (softening point or the like) of the glass becomes high, the low-temperature sealing becomes difficult, and the glass is prone to phase separation. In addition, vitrification becomes difficult.

WO₃ is a component that reduces the thermal expansion coefficient. A content of WO₃ is preferably 0% to 20%, 0% to 10%, 0% to 5%, and particularly preferably 0.1% to 3%. In a case where the content of WO₃ is extremely large, the glass becomes thermally unstable, the glass is prone to devitrification during melting or firing, the viscosity (softening point or the like) of the glass increases, and low-temperature sealing becomes difficult.

P₂O₅ is a component that forms a glass network and that thermally stabilizes the glass. A content of P₂O₅ is preferably 0% to 10%, 0% to 5%, 0% to 2%, and particularly preferably 0% to 1%. In a case where the content of P₂O₅ is extremely large, the viscosity (softening point or the like) of the glass becomes high, the low-temperature sealing becomes difficult, and the weather resistance is likely to be deteriorated.

La₂O₃ is a component that thermally stabilizes the glass and that prevents devitrification of the glass. A content of La₂O₃ is preferably 0% to 10%, 0% to 5%, 0% to 2%, and particularly preferably 0.1% to 1%. In a case where the content of La₂O₃ is extremely large, the viscosity (softening point or the like) of the glass increases, and low-temperature sealing tends to be difficult.

SiO₂ is a component that thermally stabilizes the glass and that reduces the thermal expansion coefficient. A content of SiO₂ is preferably 0% to 5%, 0% to 2%, and particularly preferably 0.1% to 1%. In a case where the content of SiO₂ is extremely large, the viscosity (softening point or the like) of the glass increases, and low-temperature sealing tends to be difficult.

TiO₂ is a component that thermally stabilizes the glass and that reduces the thermal expansion coefficient. A content of TiO₂ is preferably 0% to 5%, 0% to 2%, and particularly preferably 0.1% to 1%. In a case where the content of TiO₂ is extremely large, the viscosity (softening point or the like) of the glass increases, and low-temperature sealing tends to be difficult.

ZrO₂ is a component that thermally stabilizes the glass and that reduces the thermal expansion coefficient. A content of ZrO₂ is preferably 0% to 5%, 0% to 2%, and particularly preferably 0.1% to 1%. In a case where the content of ZrO₂ is extremely large, the viscosity (softening point or the like) of the glass increases, and low-temperature sealing tends to be difficult.

CeO₂ is a component that thermally stabilizes the glass and that reduces the thermal expansion coefficient. A content of CeO₂ is preferably 0% to 5%, 0% to 2%, and particularly preferably 0.1% to 1%. In a case where the content of CeO₂ is extremely large, the viscosity (softening point or the like) of the glass increases, and low-temperature sealing tends to be difficult.

Ga₂O₃ is a component that thermally stabilizes the glass and that increases the weather resistance, but is very expensive, and therefore, a content thereof is preferably less than 0.1%.

Y₂O₃, GeO₂, and Sb₂O₃ are components that thermally stabilize the glass and that prevent devitrification, and each of these components may be added up to less than 5%. In a case where the content of each component is extremely large, the glass becomes thermally unstable, and the glass is prone to devitrification during melting or firing.

The sealing material according to the present invention contains a glass powder made of the above-described glass composition. The sealing material according to the present invention may contain a refractory filler powder in order to improve the mechanical strength or to adjust the thermal expansion coefficient. A mixing ratio thereof is preferably 40 vol% to 100 vol% of the glass powder and 0 vol% to 60 vol% of the refractory filler powder, 50 vol% to 90 vol% of the glass powder and 10 vol% to 50 vol% of the refractory filler powder, 55 vol% to 80 vol% of the glass powder and 20 vol% to 45 vol% of the refractory filler powder, and particularly preferably 60 vol% to 70 vol% of the glass powder and 30 vol% to 40 vol% of the refractory filler powder. In a case where the content of the refractory filler powder is extremely large, a ratio of the glass powder becomes relatively small, and thus it becomes difficult to ensure desired fluidity.

The refractory filler powder preferably contains Zr₂WO₄(PO₄)₂. Zr₂WO₄(PO₄)₂ has properties of hardly reacting with the glass powder according to the present invention and further significantly reducing the thermal expansion coefficient of the sealing material.

In addition, for the sealing material according to the present invention, a refractory filler powder other than Zr₂WO₄(PO₄)₂ can also be used as the refractory filler powder. Examples of such another refractory filler powder include powders made of NbZr(PO₄)₃, Zr₂MoO₄(PO₄)₂, Hf₂WO₄(PO₄)₂, Hf₂MoO₄(PO₄)₂, zirconium phosphate, zircon, zirconia, tin oxide, aluminum titanate, quartz, β-spodumene, mullite, titania, quartz glass, β-eucryptite, β-quartz, willemite, cordierite, or Sr_{0.5}Zr₂(PO₄)₃. Such powders can be used individually, or two or more of such powders can be mixed and used.

The refractory filler powder is preferably substantially spherical. Such a refractory filler powder is less likely to inhibit the fluidity of the glass powder when the glass powder is softened, resulting in the improvement of the fluidity of the sealing material. In addition, this makes it easier to obtain a smooth glaze layer. Further, even when a portion of the refractory filler powder is exposed to a surface of the glaze layer, the stress of this portion may be dispersed because of the substantially spherical shape of the refractory filler powder. Accordingly, it is less likely to apply improper stress to an object to be sealed and to easily ensure airtightness even when the object to be sealed is brought into contact with the glaze layer upon sealing.

An average particle size D₅₀ of the refractory filler powder is preferably 0.2 µm to 20 µm, and particularly preferably 2 µm to 15 µm. In a case where the average particle size D₅₀ is extremely large, the sealing layer is prone to be thick. On the other hand, in a case where the average particle size D₅₀ is extremely small, the refractory filler powder is extracted into the glass during sealing, and the glass is prone to devitrification. The "average particle size D₅₀" refers to a value measured on a volume basis, and indicates a value measured by a laser diffraction method.

The softening point of the sealing material according to the present invention is preferably 360°C or lower, 350°C or lower, and particularly preferably 340°C or lower. In a case where the softening point is extremely high, the viscosity of the glass may increase, thus the sealing temperature may increase, and an element may be deteriorated by heat during sealing. A lower limit of the softening point is not particularly limited, and is realistically 180°C or higher. Here, the "softening point" refers to a value measured by a macro-type differential thermal analyzer using a sealing material having an average particle size D₅₀ of 0.5 µm to 20 µm as a measurement sample. As measurement conditions, measurement is started from a room temperature, and a heating rate is 10°C/min. The softening point measured by a macro-type differential thermal analyzer refers to the temperature (Ts) at a fourth inflection point in a measurement curve illustrated in FIG. 1.

The thermal expansion coefficient in a temperature range of 30°C to 150°C of the sealing material according to the present invention is preferably 20 × 10⁻⁷/°C to 200 × 10⁻⁷/°C, 30 × 10⁻⁷/°C to 160 × 10⁻⁷/°C, 40 × 10⁻⁷/°C to 140 × 10⁻⁷/°C, and particularly preferably 50 × 10⁻⁷/°C to 120 × 10⁻⁷/°C. In a case where the thermal expansion coefficient is out of the above range, a sealing portion is prone to breaking at the time of sealing or after sealing due to a difference in thermal expansion from a material to be sealed.

Next, an example of a manufacturing method and a use method of the glass powder and the sealing material according to the present invention will be described.

First, a raw material powder mixed to have desired glass composition is melted at 700°C to 1,000°C for 1 hour to 2 hours until homogeneous glass is obtained. Next, the obtained molten glass is formed into a film shape or the like, and then ground and classified to produce a glass powder. The average particle size D₅₀ of the glass powder is preferably about 1 µm to 20 µm. As necessary, various types of the refractory filler powder is added to and mixed with the glass powder to form a sealing material.

Next, a vehicle is added to and kneaded with the sealing material to prepare a sealing material paste. The vehicle is mainly made of an organic solvent and a resin, and the resin is added to adjust the viscosity of the paste. In addition, a surfactant, a thickener, or the like can also be added as necessary.

The organic solvent preferably has a low boiling point (e.g., boiling point of 300°C or lower), leaves little residue after firing, and does not change the glass in quality. A content thereof is preferably 10 mass% to 40 mass%. As the organic solvent, propylene carbonate, toluene, N,N'-dimethylformamide (DMF), 1,3-dimethyl-2-imidazolidinone (DMI), dimethyl carbonate, butyl carbitol acetate (BCA), isoamyl acetate, dimethyl sulfoxide, acetone, methyl ethyl ketone, or the like is preferably used. In addition, a higher alcohol is more preferably used as the organic solvent. The higher alcohol itself has viscosity and thus can be formed into a paste without adding any resin to the vehicle. In addition, pentanediol and derivatives thereof, specifically, diethylpentanediol (C₉H₂₀O₂), have excellent viscosity and thus can be used as the solvent.

The resin preferably has a low decomposition temperature, leaves little residue after firing, and hardly change the glass in quality. A content thereof is preferably 0.1 mass% to 20 mass%. As the resin, nitrocellulose, polyethylene glycol derivatives, polyethylene carbonate, acrylic esters (acrylic resins), or the like is preferably used.

The sealing material paste is then applied to a sealed portion of an object to be sealed made of a metal, ceramic, or glass, using a coating machine such as a dispenser or a screen printer, dried, and subjected to a glaze treatment at 280°C to 320°C. Thereafter, another object to be sealed is brought into contact and subjected to a heat treatment at 300°C to 400°C to allow the glass powder to soften and flow, so that both objects are sealed.

The glass powder according to the present invention can be used for the purpose of coating or filling, in addition to sealing applications. In addition, the glass powder can also be used in a form other than the paste, specifically such as a powder, a green sheet, or a tablet (form prepared by sintering powder material into given shape).

### Examples

The present invention will be described in detail based on Examples. Tables 1 and 2 show examples (Sample Nos. 1 to 10 and 12 to 29) and a comparative example (Sample No. 11) of the present invention.

**Table 1**

| | | Example | | | | | | | | | | Comparative Example |
|---|---|---|---|---|---|---|---|---|---|---|---|---|
| | | No.1 | No.2 | No.3 | No.4 | No.5 | No.6 | No.7 | No.8 | No.9 | No.10 | No.11 |
| Glass composition (mol%) | TeO₂ | 54.5 | 54.5 | 44 | 48 | 44 | 48 | 51 | 50 | 50 | 44 | 59.5 |
| | MoO₃ | 4.5 | 2.5 | 4.5 | 2.5 | 2.5 | 2.5 | 2.5 | 2.5 | 2.5 | 4.5 | 4.5 |
| | V₂O₅ | 15 | 15 | 12.5 | 17 | 22 | 12.5 | 12.5 | 15 | 15 | 12.5 | 15 |
| | Nb₂O₅ | 4 | 4 | 3 | 4 | 4 | 4 | 4 | 4 | 4 | 3 | |
| | CuO | 1 | 1 | 12.5 | 7.5 | 3 | 6 | 6 | 7.5 | 7.5 | 12.5 | 1 |
| | Al₂O₃ | 1 | 1 | 1 | 0.5 | 1.5 | 1.5 | 1.5 | 0.5 | 0.5 | 1 | |
| | Li₂O | 6 | 6 | | 6 | 7 | 3.5 | | 6 | 6 | 6 | 6 |
| | Na₂O | | | 6 | | | | 3 | | | | |
| | K₂O | 12 | 12 | 12 | 12 | 14 | 17.5 | 15 | 12 | 12 | 12 | 12 |
| | MgO | | | | | | | | 0.5 | | | |
| | CaO | | | | | | | | | 0.5 | | |
| | SrO | | 1 | | 0.5 | | | | | | | |
| | BaO | 2 | 3 | 2 | 1.5 | 2 | 2 | 2 | 1.5 | 1.5 | | 2 |
| | ZnO | | | | | | | | | | 2 | |
| | WO₃ | | | 2.5 | | | 2.5 | 2.5 | | | 2.5 | |
| | La₂O₃ | | | | 0.5 | | | | 0.5 | 0.5 | | |
| | Nb₂O₃+MnO+Cr₂O₃ +Fe₂O+Co₃O₄+NiO | 4 | 4 | 3 | 4 | 4 | 4 | 4 | 4 | 4 | 3 | 0 |
| | Li₂O+Na₂O+K₂O | 18 | 18 | 18 | 18 | 21 | 21 | 18 | 18 | 18 | 18 | 18 |
| | Li₂O+Na₂O | 6 | 6 | 6 | 6 | 7 | 3.5 | 3 | 6 | 6 | 6 | 6 |
| | MgO+CaO+SrO +BaO+ZnO | 2 | 4 | 2 | 2 | 2 | 2 | 2 | 2 | 2 | 2 | 2 |
| | (Li₂O+Na₂O)/K₂O | 0.5 | 0.5 | 0.5 | 0.5 | 0.5 | 0.2 | 0.2 | 0.5 | 0.5 | 0.5 | 0.5 |
| Refractory filler powder | | ZWP | ZWP | ZWP | ZWP | ZWP | ZWP | ZWP | ZWP | ZWP | ZWP | ZWP |
| (Vol%) | | 40 | 40 | 35 | 40 | 40 | 40 | 35 | 40 | 40 | 35 | 35 |
| Glass transition point (°C) | | 261 | 264 | 274 | 271 | 259 | 273 | 280 | 271 | 272 | 276 | 276 |
| Thermal expansion coefficient (× 10⁻⁷/°C) | | 80 | 78 | 83 | 75 | 71 | 81 | 81 | 73 | 74 | 84 | 76 |
| Softening point (°C) | | 335 | 337 | 340 | 338 | 328 | 340 | 342 | 339 | 338 | 341 | 340 |
| Fluidity | | ○ | ○ | ○ | ○ | ○ | ○ | ○ | ○ | ○ | ○ | ○ |
| Weather resistance | | ○ | ○ | ○ | ○ | ○ | ○ | ○ | ○ | ○ | ○ | × |

**Table 2**

| | | Example | | | | | |
|---|---|---|---|---|---|---|---|
| | | No.12 | No.13 | No.14 | No.15 | No.16 | No.17 |
| Glass composition (mol%) | TeO₂ | 40 | 40 | 39 | 40 | 39 | 40 |
| | MoO₃ | 2 | 2 | 2 | 2 | 2 | 2 |
| | V₂O₅ | 22 | 22 | 22 | 22 | 22 | 22 |
| | Nb₂O₅ | 3 | 3 | 3 | 3 | 3 | 3 |
| | CuO | 4.5 | 4.5 | 4.5 | 4.5 | 4.5 | 4.5 |
| | Al₂O₃ | 1.5 | 1.5 | 1.5 | 1.5 | 1.5 | 1.5 |
| | Li₂O | 3 | 3 | 3 | 3 | 3 | 3 |
| | Na₂O | | | | | | |
| | K₂O | 15 | 15 | 15 | 15 | 15 | 15 |
| | MgO | | | | | | |
| | CaO | | | | | | |
| | SrO | | | | | | |
| | BaO | 2 | 2 | 2 | 2 | 2 | 2 |
| | ZnO | 5 | 5 | 5 | 5 | 5 | 5 |
| | WO₃ | 1 | 1 | 1 | 1 | 1 | 1 |
| | La₂O₃ | | | | | | |
| | SiO₂ | 1 | | | | | |
| | TiO₂ | | 1 | 2 | | | |
| | ZrO₂ | | | | 1 | 2 | |
| | CeO₂ | | | | | | 1 |
| | Nb₂O₃+MnO+Cr₂O₃+Fe₂O+Co₃O₄+NiO | 3 | 3 | 3 | 3 | 3 | 3 |
| | Li₂O+Na₂O+K₂O | 18 | 18 | 18 | 18 | 18 | 18 |
| | Li₂O+Na₂O | 3 | 3 | 3 | 3 | 3 | 3 |
| | MgO+CaO+SrO+BaO+ZnO | 7 | 7 | 7 | 7 | 7 | 7 |
| | (Li₂O+Na₂O)/K₂O | 0.2 | 0.2 | 0.2 | 0.2 | 0.2 | 0.2 |
| Refractory filler powder | | ZWP | ZWP | ZWP | ZWP | ZWP | ZWP |
| (Vol%) | | 40 | 40 | 40 | 40 | 40 | 40 |
| Glass transition point (°C) | | 259 | 262 | 264 | 263 | 266 | 264 |
| Thermal expansion coefficient (× 10⁻⁷/°C) | | 83 | 82 | 82 | 81 | 81 | 81 |
| Softening point (°C) | | 333 | 336 | 339 | 338 | 342 | 338 |
| Fluidity | | ○ | ○ | ○ | ○ | ○ | ○ |
| Weather resistance | | ○ | ○ | ○ | ○ | ○ | ○ |

**Table 3**

| | | Example | | | | | | | | | | | |
|---|---|---|---|---|---|---|---|---|---|---|---|---|---|
| | | No.18 | No.19 | No.20 | No.21 | No.22 | No.23 | No.24 | No.25 | No.26 | No.27 | No.28 | No.29 |
| Glass composition (mol%) | TeO₂ | 42 | 42.5 | 42 | 42 | 44 | 44 | 44 | 44 | 44 | 44 | 44 | 44 |
| | MoO₃ | 2 | 2 | 2 | 2 | 2 | 2 | 2 | 2 | 2 | 2 | 2 | 2 |
| | V₂O₅ | 22 | 22 | 22 | 22 | 22 | 22 | 22 | 22 | 22 | 22 | 22 | 22 |
| | Nb₂O₅ | 3.5 | 3.5 | 3.5 | 3.5 | | | | | | | | |
| | MnO | 1 | | | | 3.5 | | | 3.5 | 3.5 | 3.5 | | |
| | Cr₂O₃ | | 0.5 | | | | 3.5 | | | | | 3.5 | 3.5 |
| | Fe₂O₃ | | | | | | | 3.5 | | | | | |
| | Co₃O₄ | | | 1 | | | | | | | | | |
| | NiO | | | | 1 | | | | | | | | |
| | CuO | 0.5 | 0.5 | 0.5 | 0.5 | | | | | | | | |
| | Al₂O₃ | 1.5 | 1.5 | 1.5 | 1.5 | 1.5 | 1.5 | 1.5 | 1.5 | 1.5 | 1.5 | 1.5 | 1.5 |
| | Li₂O | 3 | 3 | 3 | 3 | 3 | 3 | 3 | 3 | 3 | 3 | | 6 |
| | Na₂O | | | | | | | | | | | 3 | |
| | K₂O | 15 | 15 | 15 | 15 | 15 | 15 | 15 | 15 | 15 | 15 | 15 | 12 |
| | MgO | | | | | | | | 0.5 | | | | |
| | CaO | | | | | | | | | 0.5 | | | |
| | SrO | | | | | | | | | | 0.5 | | |
| | BaO | 2 | 2 | 2 | 2 | 2 | 2 | 2 | 1.5 | 1.5 | 1.5 | 2 | 2 |
| | ZnO | 5.5 | 5.5 | 5.5 | 5.5 | 5 | 5 | 5 | 5 | 5 | 5 | 5 | 5 |
| | Nb₂O₅ | 3.5 | 3.5 | 3.5 | 3.5 | | | | | | | | |
| | WO₃ | 1 | 1 | 1 | 1 | 1 | 1 | 1 | 1 | 1 | 1 | 1 | 1 |
| | TiO₂ | 1 | 1 | 1 | 1 | 1 | 1 | 1 | 1 | 1 | 1 | 1 | 1 |
| | Nb₂O₅+MnO+Cr₂O₃ +Fe₂O+Co₃O₄+NiO | 4.5 | 4 | 4.5 | 4.5 | 3.5 | 3.5 | 3.5 | 3.5 | 3.5 | 3.5 | 3.5 | 3.5 |
| | Li₂O+Na₂O+K₂O | 18 | 18 | 18 | 18 | 18 | 18 | 18 | 18 | 18 | 18 | 18 | 18 |
| | Li₂O+Na₂O | 3 | 3 | 3 | 3 | 3 | 3 | 3 | 3 | 3 | 3 | 3 | 6 |
| | MgO+CaO+SrO +BaO+ZnO | 7.5 | 7.5 | 7.5 | 7.5 | 7 | 7 | 7 | 7 | 7 | 7 | 7 | 7 |
| | (Li₂O+Na₂O)/K₂O | 0.2 | 0.2 | 0.2 | 0.2 | 0.2 | 0.2 | 0.2 | 0.2 | 0.2 | 0.2 | 0.2 | 0.5 |
| Refractory filler powder | | ZWP | ZWP | ZWP | ZWP | ZWP | ZWP | ZWP | ZWP | ZWP | ZWP | ZWP | ZWP |
| (Vol%) | | 35 | 35 | 35 | 35 | 40 | 40 | 35 | 40 | 40 | 40 | 40 | 40 |
| Glass transition point (°C) | | 264 | 260 | 266 | 264 | 248 | 246 | 265 | 254 | 253 | 250 | 243 | 250 |
| Thermal expansion coefficient (× 10⁻⁷/°C) | | 89 | 87 | 85 | 88 | 98 | 96 | 91 | 91 | 93 | 94 | 98 | 91 |
| Softening point (°C) | | 338 | 333 | 344 | 340 | 322 | 320 | 335 | 330 | 329 | 326 | 318 | 323 |
| Fluidity | | ○ | ○ | ○ | ○ | ○ | ○ | ○ | ○ | ○ | ○ | ○ | ○ |
| Weather resistance | | ○ | ○ | ○ | ○ | ○ | ○ | ○ | ○ | ○ | ○ | ○ | ○ |

First, a raw material powder mixed to have the glass composition shown in the tables was placed in a platinum crucible and melted at 700°C to 1,000°C in the air for 1 hour to 2 hours. The molten glass was then formed into a film shape with a water-cooled roller. The film-shaped glass was ground with a ball mill and then passed through a sieve with an opening of 75 µm, and a glass powder with an average particle size D₅₀ of about 10 µm was obtained.

The obtained glass powder was then mixed with a refractory filler powder as shown in the tables, and a mixed powder was obtained.

As the refractory filler powder, substantially spherical Zr₂WO₄(PO₄)₂ (denoted as ZWP in tables) was used. The average particle size D₅₀ of the refractory filler powder was about 10 µm.

Samples Nos. 1 to 29 were evaluated for the glass transition point, the thermal expansion coefficient, the softening point, the fluidity, and the weather resistance.

The glass transition point and the thermal expansion coefficient in a temperature range of 30°C to 150°C were evaluated as follows. First, the mixed powder was placed in a bar-shaped mold, press-molded, and then fired at 280°C to 350°C for 10 minutes on an alumina substrate coated with a release agent. Thereafter, the fired body was processed into a predetermined shape and measured with a TMA apparatus.

The softening point was measured with a macro-differential thermal analyzer, and the fourth inflection point was taken as the softening point. A measurement atmosphere was in the air, a heating rate was 10°C/min, and the measurement was started from a room temperature.

The fluidity was evaluated as follows. A mass corresponding to a combined density of the mixed powder was placed in a mold with a diameter of 20 mm and press-molded to obtain a green compact. Thereafter, the green compact was fired on a glass substrate at 350°C for 10 minutes. A fired body with a flow diameter of 19 mm or more was rated as "∘", and a fired body with a flow diameter of less than 19 mm was rated as "×".

The weather resistance was evaluated by an accelerated degradation test according to a pressure cooker test (PCT). Specifically, the fired body produced above was held in an environment at 121°C, 2 atm, and a relative humidity of 100% for 24 hours and then visually observed. A fired body with no crack was rated as "∘" and a fired body with a crack was rated as "×".

As clear from the tables, the fluidity and the weather resistance of Sample Nos. 1 to 10 and 12 to 29 are evaluated as good. On the other hand, since Sample No. 11 does not contain Nb₂O₅, MnO, Cr₂O₃, Fe₂O₃, Co₃O₄, and NiO, the weather resistance is poor, and a crack occurs in the fired body.

### INDUSTRIAL APPLICABILITY

The glass composition according to the present invention is suitable for sealing a crystal oscillator package and in addition, suitable for sealing an airtight package, such as those of a semiconductor integrated circuit, a flat display device, a glass terminal for an LED, and an aluminum nitride substrate. In addition, the glass composition may also be used as a sealing material for a metal and vacuum insulation glass.

## Claims

1. A glass composition comprising: in mol%, 15% to 80% of TeO₂, 0.1% to 30% of MoO₃, 5% to 40% of V₂O₅, and 0.1% to 10% of Nb₂O₅+MnO+Cr₂O₃+Fe₂O₃+Co₃O₄+NiO as glass composition.

2. The glass composition according to claim 1, further comprising: in mol%, 0.1% to 35% of CuO, 0.1% to 10% of Al₂O₃, 1% to 30% of K₂O, and 0% to 10% of PbO as glass composition, and substantially free of SeO₂.

3. The glass composition according to claim 1 or 2, further comprising: in mol%, 0.1% to 15% of Li₂O+Na₂O as glass composition, wherein in terms of a molar ratio, (Li₂O+Na₂O)/K₂O is 0.05 to 1.

4. The glass composition according to claim 1 or 2, further comprising: in mol%, 0.1% to 20% of MgO+CaO+SrO+BaO+ZnO as glass composition.

5. The glass composition according to claim 1 or 2, further comprising: in mol%, 0% to 10% of La₂O₃ and 0% to 10% of WO₃ as glass composition.

6. The glass composition according to claim 1 or 2, further comprising: in mol%, 0% to 5% of SiO₂, 0% to 5% of TiO₂, 0% to 5% of ZrO₂, and 0% to 5% of CeO₂ as glass composition.

7. A sealing material comprising: 40 vol% to 100 vol% of a glass powder made of the glass composition according to claim 1 or 2; and 0 vol% to 60 vol% of a refractory filler powder.

8. The sealing material according to claim 7, wherein the refractory filler powder is substantially spherical.

9. The sealing material according to claim 7, wherein the refractory filler powder is entirely or partially Zr₂WO₄(PO₄)₂.

10. The sealing material according to claim 7 for use in a crystal oscillator package.

11. The sealing material according to claim 7 for use in vacuum insulation glass.

12. A sealing material paste comprising: the sealing material according to claim 7; and a vehicle.
